# FASCICULE DE BREVET EUROPEEN

(11) **EP 3 472 794 B1**
(45) Date de publication et mention de la délivrance du brevet: **28.02.2024**
(21) Numéro de dépôt: 17742799.4
(22) Date de dépôt: 19.06.2017
(51) Int. Cl.: G06Q 30/06, G06Q 50/30

(54) **SYSTEM DE MISE A DISPOSITION DE VÉHICULES PARTAGES AMARRES A DES STATIONS, ET DISPOSITIFS ASSOCIES**
SYSTEM ZUR BEREITSTELLUNG GEMEINSAM GENUTZTER, AN STATIONEN FESTGEMACHTER FAHRZEUGE UND ZUGEHÖRIGE VORRICHTUNGEN
SYSTEM FOR PROVIDING SHARED VEHICLES MOORED AT STATIONS, AND ASSOCIATED DEVICES

(30) Priorité: 20.06.2016 FR 1655694
(43) Date de publication de la demande: 24.04.2019
(73) Titulaire: Human Concept, 44100 Nantes (FR)
(72) Inventeur: BOURBOUSSON, Sébastien, 44100 Nantes (FR)
(74) Mandataire: Cougard, Jean-Marie
(86) Numéro de dépôt international: PCT/FR2017/051605
(87) Numéro de publication internationale: WO 2017/220911

(56) Documents cités:
- EP-A1- 2 846 315
- KR-A- 20110 007 466
- US-A1- 2009 201 127
- US-A1- 2011 307 394

## Description

### 1. DOMAINE DE L'INVENTION

Le domaine de l'invention est celui de la mise à disposition de véhicules partagés à un ensemble d'utilisateurs pendant un temps plus ou moins long, ces véhicules étant accessibles à des points fixes d'amarrage. L'invention concerne plus particulièrement le fait que les véhicules sont amarrés à des chaînes comportant des puces permettant de les identifier et de les localiser.

### 2. ARRIÈRE-PLAN TECHNOLOGIQUE

Il est connu dans les villes des systèmes de mise à la disposition de véhicules, typiquement des vélos, permettant à des utilisateurs de se déplacer plus facilement. Très généralement, les utilisateurs disposent d'un abonnement leur permettant d'avoir accès à ce service. Des stations d'amarrage intelligentes et électrifiées sont disposées sur une large étendue, par exemple dans une ville, ces stations disposent d'un terminal fixe commandant une pluralité de verrous électriques amarrant des véhicules partagés situés à proximité immédiate. Un abonné se présente et s'identifie auprès de l'unité centrale qui vérifie les informations introduites et accorde ou non l'accès à un véhicule. Si l'accès est accordé, le terminal affiche une information identifiant le véhicule disponible et déverrouille ce véhicule. L'abonné prend le véhicule identifié et l'utilise aussi longtemps qu'il en a besoin pour le rendre ensuite dans une station d'amarrage. Lorsque le véhicule est ramené à une station d'amarrage, l'abonné et/ou le véhicule sont identifiés et le système enregistre que ce véhicule est de nouveau disponible. L'abonné paye un forfait ou une location dont le montant dépend du temps au cours duquel le véhicule est utilisé. L'abonné peut accéder à un tel service en présentant une carte d'abonnement, ou en introduisant un identifiant et un mot de passe sur une interface utilisateur du terminal de la station où il se trouve.

Un tel système de mise à la disposition de véhicules partagés nécessite des stations d'amarrage électrifiées, avec un terminal de communication fixe et un ensemble de verrous électriques pour amarrer les véhicules. De telles installations sont complexes et très coûteuses à installer et à maintenir. De ce fait, ces installations sont peu nombreuses sur une aire géographique donnée, ce qui oblige quelquefois les abonnés à se déplacer loin pour trouver un véhicule.

Pour remédier à cet inconvénient, les constructeurs ont équipé les véhicules d'un système embarqué comportant une unité centrale, une batterie, une interface utilisateur et un verrou électrique. L'abonné prend un véhicule à une station équipée de chaînes d'amarrage non électrifiées en introduisant un code sur l'interface utilisateur de véhicule. L'unité centrale embarquée reconnaît le code introduit et débloque le verrou électrique. En fin de location, l'abonné laisse son véhicule à une station d'amarrage en verrouillant la chaîne dans le verrou électrique. L'abonné informe par téléphone portable un serveur distant qu'il a rendu son véhicule à un certain endroit. Le lieu où se trouve le véhicule peut être déterminé par des coordonnées GPS (acronyme de l'anglo-saxon « Global Positioning System ») déterminées par le téléphone portable de l'abonné.

Un tel système présente cependant l'inconvénient que l'abonné doit avertir un serveur centralisé de l'endroit où il a laissé le véhicule. Pour cela, l'abonné doit posséder un téléphone portable et introduire l'endroit précis où le véhicule est laissé. Sans cette information, le serveur ne peut le savoir et ne peut pas indiquer à un abonné suivant où ce véhicule est disponible. Ce système est en partie basé sur des données déclaratives que l'abonné n'est pas forcé de donner pour prendre et rendre un véhicule. De plus, si l'abonné ne connaît pas la ville où il se déplace et si son téléphone portable ne dispose pas d'un module GPS, il risque de donner une information imprécise de l'endroit où est le véhicule. Dans un tel système, l'exploitant du service doit faire confiance à l'utilisateur de ce service.

Selon un autre aspect de l'invention, il peut être souhaitable que l'abonné puisse amarrer son véhicule à n'importe quel endroit, pour un court moment et pas forcément dans une station prévue à cet effet. Une solution classique consiste à utiliser un antivol acheté dans le commerce, mais l'abonné peut l'oublier au moment du départ. Il est donc préférable que le système de mise à disposition de véhicules partagés prévoit un moyen d'amarrage sécurisé et solidarisé au véhicule. D'autres systèmes existent où le véhicule comporte un câble qui est solidement fixé à ce véhicule et qui se loge dans un compartiment. Dans d'autres systèmes, les utilisateurs peuvent trouver un peu partout des câbles d'amarrage fixés en des lieux déterminés, qu'ils peuvent utiliser pour des besoins ponctuels ou de longue durée. D'autres systèmes existants proposent des véhicules en libre-service sans aucun point fixe d'amarrage, le véhicule étant d'abord immobilisé par son propre moyen d'amarrage au niveau des roues ou du guidon avant l'autorisation de déblocage par le système embarqué. De tels systèmes posent un problème de voirie et d'occupation de l'espace public.

Il existe donc un réel besoin d'améliorer les systèmes de mise à disposition de véhicules partagés à un ensemble d'utilisateurs, afin d'éviter que ceux-ci donnent de façon non-contraignante des informations importantes au bon fonctionnement du système.

Le document US 2011/307394 A1 en date du 15 décembre 2011 divulgue un système de partage de vélo visant à permettre le retour d'un vélo emprunté quel que soit le lieu.

Le document KR 2011 0007466 A en date du 24 janvier 2011 divulgue un système automatique sans fil de location de vélo visant à permettre le retour d'un vélo emprunté même s'il n'y a pas plus de place dans la station de vélos.

### 3. EXPOSÉ DE L'INVENTION

La présente invention est définie dans le jeu de revendications ci-après. Selon l'invention, il est proposé un système de mise à la disposition de véhicules partagés comportant :
- au moins un véhicule partagé possédant sa propre chaîne mobile d'amarrage se terminant à une extrémité par un insert mécanique destiné à être inséré dans un verrou, ledit insert possédant une puce électronique contenant un identifiant du véhicule et embarquant un appareil comportant une interface utilisateur, un moyen de lecture des puces d'identification, et au moins un verrou électrique pour amarrer le véhicule à au moins un point fixe avec ladite chaîne mobile d'amarrage,
- au moins un terminal portable doté d'un moyen de communication avec un serveur distant,
- un serveur distant doté d'un moyen de chiffrement et d'une mémoire contenant des codes identifiant chaque véhicule.

Le moyen de lecture lit une donnée d'identification émise par la puce électronique, l'appareil embarqué générant une information représentative de la donnée lue de la puce électronique contenue dans l'insert inséré dans le verrou et d'un identifiant du véhicule, l'introduction de ladite information au niveau du terminal portable déclenchant sa transmission au serveur distant via le moyen de communication, le serveur générant un code d'autorisation qui est au moins fonction de l'information transmise et de données secrètes mémorisées associées au véhicule et transmettant sous forme chiffrée ce code d'autorisation vers le terminal portable, une action de l'utilisateur introduite au niveau de l'interface utilisateur déclenchant la transmission du code d'autorisation à l'appareil embarqué, la réception de ce code d'autorisation débloquant le verrou électrique.

Ainsi, la solution proposée repose sur une approche tout à fait nouvelle et inventive, permettant d'amarrer facilement le véhicule à n'importe quel endroit en utilisant une chaîne mobile d'amarrage, tout en respectant les garanties d'usages habituelles liées aux véhicules partagés pour du libre-service.

Selon un autre mode de réalisation, le système comporte un moyen d'affichage de l'interface utilisateur affichant l'information représentative de la donnée lue et de l'identifiant du véhicule, et un clavier au niveau du terminal portable pour introduire manuellement ladite information affichée. De cette manière, le système embarqué n'a pas besoin d'un module de communication avec le serveur, c'est l'abonné qui s'en charge en utilisant son terminal portable.

Selon un autre mode de réalisation, l'information représentative de la donnée lue et de l'identifiant du véhicule s'effectue en approchant le terminal portable de l'interface utilisateur déclenchant l'établissement d'une communication sans contact avec le terminal portable et la transmission de ladite information à ce terminal portable. De cette manière, la communication entre le système embarqué et le terminal portable est grandement simplifiée.

Selon un autre mode de réalisation, lors de l'introduction de l'insert dans le verrou, l'appareil compare le code émis par la puce de l'insert avec un code de référence identifiant la chaîne mobile de ce véhicule, et déclenche le verrouillage de l'insert lorsque les codes sont identiques. De cette manière, le système embarqué peut interdire une enfilade de véhicules.

Selon un autre mode de réalisation, l'introduction d'une commande sur l'interface utilisateur déclenche l'affichage d'un code à introduire sur le clavier du terminal portable, ladite introduction du code déclenchant la géolocalisation du portable par un module intégré et l'émission vers le serveur d'un message indiquant une fin de location en spécifiant où se trouve le véhicule. De cette manière, la géolocalisation s'effectue simplement par le terminal portable et transmise dans le message au serveur.

Selon un autre mode de réalisation, l'introduction d'une commande sur l'interface utilisateur déclenche l'affichage d'un code à introduire sur le clavier du terminal portable, ladite introduction du code déclenchant l'apparition d'un menu permettant d'introduire manuellement une information de géolocalisation et l'émission vers le serveur d'un message indiquant une fin de location en spécifiant où le véhicule se trouve. De cette manière, l'abonné peut indiquer au serveur où il a laissé le véhicule.

Selon un autre mode de réalisation, l'introduction d'une commande sur l'interface utilisateur déclenche la géolocalisation du véhicule par un module intégré dans l'appareil, l'information de géolocalisation produite par ledit module étant communiquée au terminal portable afin d'être transmise au serveur distant. De cette manière, le véhicule dispose d'un moyen de géolocalisation et génère une donnée contenant la localisation qui est ensuite transmise au serveur sans autre intervention de l'abonné.

Selon un autre mode de réalisation, le serveur enregistre dans sa mémoire une information spécifiant que le véhicule est disponible pour un nouvel emprunt et qu'il est disponible à l'endroit indiqué par l'information de géolocalisation transmise. De cette manière, la gestion des véhicules est facilement réalisée au niveau d'un serveur distant.

Selon un autre mode de réalisation, le système comporte en outre une étape de prise d'au moins une photographie du véhicule avec sa chaîne amarrée à un point fixe, la photographie étant transmise au serveur et enregistrée dans la mémoire. De cette manière, l'abonné peut se constituer un moyen de preuve indiquant qu'il a bien rendu son véhicule et qu'il l'a amarré à un endroit précis.

Selon l'invention, le système embarqué possède une mémoire contenant au moins une pluralité d'identifiants d'inserts de chaînes d'amarrage solidarisées à des points fixes, le verrou se verrouillant lorsque l'identifiant de la puce de l'insert inséré dans le verrou correspond à celui d'une chaîne d'amarrage solidarisée à un point fixe, l'écran affichant alors un code de fin de location que l'utilisateur transmet au serveur qui enregistre dans sa mémoire une information spécifiant que le véhicule se trouve amarré à cet endroit et que la location de ce véhicule est autorisé à partir de cet endroit. De cette manière, le système embarqué peut facilement déterminer qu'un véhicule vient d'être amarré à un point fixe géolocalisé et que l'on peut en disposer pour une prochain location.

Selon l'invention, le système embarqué ne verrouille pas le verrou sur l'insert introduit lorsque l'identifiant de cet insert ne correspond ni à une chaîne d'amarrage solidarisée à un endroit fixe, ni à la chaîne mobile d'amarrage du véhicule, l'introduction d'un tel insert dont l'identifiant n'est pas reconnu par le système embarqué déclenchant l'affichage d'un message informant que le verrouillage n'est pas possible. De cette manière, le système embarqué peut interdire de réaliser une enfilade de véhicule.

Selon un autre mode de réalisation, le serveur distant possède une mémoire comportant les codes des inserts appartenant à des chaînes d'amarrage solidarisées à des points fixes, le serveur comparant le code contenu dans l'information reçue avec chaque code enregistrée en mémoire et, l'égalité entre le code reçu et un des codes mémorisé déclenche l'émission du code d'autorisation du verrouillage du verrou électrique et l'enregistrement en mémoire du serveur que le véhicule est disponible à la location à l'endroit où se trouve la chaîne d'amarrage dont l'insert se trouve dans le verrou de ce véhicule. De cette manière, l'abonné n'a plus besoin d'informer le serveur qu'il est amarré à un point fixe géolocalisé et que la location est maintenant terminée.

Selon un autre mode de réalisation, le serveur possède un moyen de réception d'une demande de réservation d'un véhicule partagé actuellement amarré à un point géolocalisé et un moyen d'écriture dans la mémoire associée à ce véhicule pour indiquer que ce véhicule est réservé, la réception venant d'un terminal portable d'une information représentative d'une donnée lue et de l'identifiant d'un véhicule déclenchant un message vers ce terminal portable signifiant que ledit véhicule est réservé et inhibant la transmission par le serveur du code d'autorisation. De cette manière, le système peut gérer des réservations.

Selon un autre mode de réalisation, le message transmis par le serveur comporte en outre un identifiant d'un autre véhicule partagé disponible se trouvant à proximité du véhicule partagé et réservé, le serveur ne transmettant pas alors de code d'autorisation, l'identifiant de cet autre véhicule étant affiché sur l'écran du terminal portable. De cette manière, le système peut adresser un abonné vers un autre véhicule si celui qu'il a choisi est réservé.

Selon un autre mode de réalisation, ledit insert comporte une puce électronique d'identification doté d'une mémoire contenant au moins une donnée d'identification et un moyen d'émission d'au moins cette donnée, l'appareil embarqué déterminant un état fonction de la présence de la puce associée au lien. De cette manière, le système embarqué peut détecter la présence d'une chaîne mobile d'amarrage et son type (chaîne mobile ou fixe).

Selon un autre mode de réalisation, la détection par le moyen de lecture d'une puce d'identification associée à un point fixe d'amarrage déclenche l'émission d'une information d'identification du véhicule et de son état et le verrouillage du verrou électrique pour amarrer le véhicule à ce point fixe, le serveur recevant ladite information contrôlant l'état du véhicule et enregistre ce véhicule comme disponible pour une nouvel emprunt si l'état transmis est correct. De cette manière, le véhicule peut être rendu disponible pour un autre abonné à la fin d'une location.

Selon un autre mode de réalisation, l'état du véhicule est décrit par l'un au moins des paramètres suivants :
- l'état verrouillé ou déverrouillée du verrou,
- la présence ou l'absence des chaînes,
- le niveau de la batterie du véhicule partagé,
- l'identifiant du véhicule partagé.

De cette manière, le serveur est informé de l'état du véhicule et peut évaluer sa capacité à être loué.

Selon un autre mode de réalisation, le serveur met à jour dans sa mémoire une liste de véhicules partagés en associant un identifiant de chaque véhicule et au moins un paramètre, l'au moins un paramètre étant un drapeau indiquant au moins les quatre états suivants d'un véhicule associé :
- amarré à un point fixe d'amarrage et disponible,
- amarré à un point fixe d'amarrage et réservé,
- en cours de location,
- en maintenance.

De cette manière, le serveur est informé à tout moment si un véhicule est loué ou non, et s'il est en maintenance.

Selon un autre aspect de l'invention, il est décrit un procédé de mise à disposition de véhicules partagés mis en oeuvre dans un système comportant :
- au moins un véhicule partagé possédant sa propre chaîne mobile d'amarrage se terminant à une extrémité par un insert mécanique destiné à être inséré dans un verrou, ledit insert possédant une puce électronique contenant un identifiant du véhicule et embarquant un appareil comportant une Interface Utilisateur, un moyen de lecture des puces électroniques, et un verrou électrique pour amarrer le véhicule avec sa propre chaîne mobile d'amarrage à un point fixe,
- au moins un terminal portable de communication doté d'un moyen de communication avec un serveur distant,
- un serveur distant doté d'un moyen de chiffrement et d'une mémoire contenant des codes identifiant au moins chaque puce dans l'insert des chaînes mobiles de chaque véhicule,
le procédé étant caractérisé en ce qu'il comporte les étapes suivantes :
- lecture par le moyen de lecture de l'appareil embarqué d'une donnée d'identification émise par la puce électronique,
- génération au sein de l'appareil embarqué d'une information représentative de la donnée lue et de l'identifiant du véhicule,
- introduction de ladite information au niveau du terminal portable déclenchant la transmission de l'information représentative du véhicule partagé vers le serveur distant,
- génération par le serveur d'un code d'autorisation qui est fonction au moins de l'information transmise et de données secrètes mémorisées associées au véhicule, et transmission sous forme chiffrée dudit code d'autorisation vers le terminal portable,
- introduction d'une action de l'utilisateur au niveau de l'interface utilisateur déclenchant la transmission du code d'autorisation à l'appareil embarqué,
- réception du code d'autorisation au niveau du véhicule déclenchant le déblocage du verrou électrique.

Selon un autre aspect de l'invention, il est décrit un véhicule partagé doté d'un appareil embarqué tel que revendiqué.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un schéma général d'un système de mise à la disposition de véhicule selon un premier mode de réalisation particulier de l'invention ;
- la figure 2 présente un diagramme temporel montrant des étapes effectuée lors de l'emprunt d'un véhicule selon un exemple de réalisation ;
- la figure 3 présente un diagramme temporel montrant des étapes effectuée lors du rendu d'un véhicule selon un exemple de réalisation ;
- la figure 4 présente un système embarqué dans un véhicule doté d'une chaîne mobile, selon un mode de réalisation particulier de l'invention.

### 5. DESCRIPTION DÉTAILLÉE

Sur toutes les figures du présent document, les éléments (ou les étapes) identiques sont désignés par une même référence numérique.

### 5.1 DESCRIPTION DU SYSTEME SELON UN PREMIER MODE

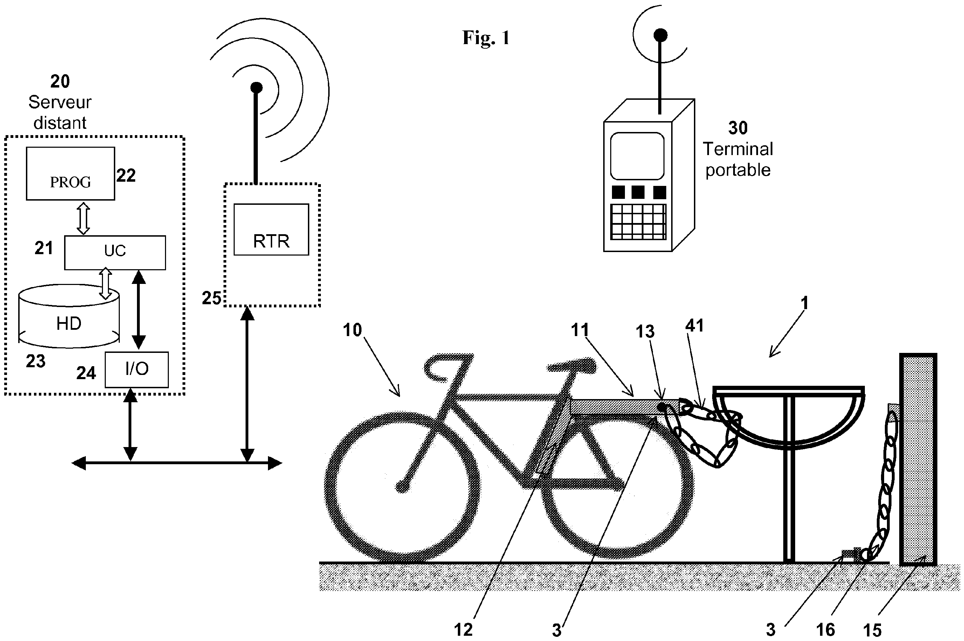

On présente maintenant, en relation avec la fig. 1, un schéma général d'un système de mise à la disposition de véhicules selon un premier mode de réalisation particulier. Selon ce premier mode, le véhicule ne dispose que de sa propre chaine mobile d'amarrage dont une extrémité est fixé au véhicule et l'autre extrémité comporte un insert. L'immobilisation du véhicule s'effectue en enroulant sa chaîne autour d'un objet fixe et en verrouillant l'insert à son extrémité dans un verrou monté sur le véhicule. L'objet sur lequel vient s'amarrer le véhicule 10 est par exemple un cerceau 1 fixé à un endroit déterminé, ce cerceau peut être parmi une pluralité de cerceaux constituant une station d'amarrage qui ne comporte aucun élément électrique, ni électronique se connectant aux véhicules.

Le système est destiné à amarrer un véhicule partagé 10, tel qu'un vélo, un vélo-électrique, un tandem, une trottinette, ou tout autre véhicule destiné au public. Ce véhicule comporte un système embarqué 11 doté d'une unité centrale, d'une interface utilisateur UI1, d'une batterie 12, et d'au moins un verrou électrique 13 conçu pour coopérer avec un insert mécanique 3 se situant à l'extrémité d'une chaîne d'amarrage mobile 41. L'unité centrale commande le verrouillage et le déverrouillage du verrou 13 de façon à immobiliser et libérer l'insert 3 glissé à l'intérieur. Le verrou électrique est doté d'un lecteur de puce RF_ID, permettant d'entrer en communication avec la puce de l'insert introduit dans le verrou 13. L'interface utilisateur qui communique avec l'unité centrale est classiquement constituée de touches, notamment un pavé numérique, et d'un écran.

Le système comporte également un serveur distant 20, doté d'une unité centrale 21 exécutant au moins une application enregistrée dans une mémoire programme 22, l'unité centrale est relié à une mémoire de données 23 (typiquement un disque dur) et une interface d'entrée/sortie 24. Cette interface communique avec le réseau téléphonique représenté ici par une base fixe 25. La mémoire de données 23 comporte notamment un premier tableau TABLEAU 1 associant chaque identifiant de véhicules partagés 10 avec un drapeau positionné selon les données transmises lors de la dernière communication relative à chaque véhicule. Le drapeau associé à un véhicule peut prendre les valeurs suivantes :
(A) - amarré à un point fixe d'amarrage et disponible,
(B) - amarré à un point fixe d'amarrage et réservé,
(C) - en cours de location,
(D) - en maintenance.

Le tableau TABLEAU 1 associe également l'état dans lequel le véhicule se trouve, cet état détermine si le véhicule est opérationnel pour un autre abonné. Les paramètres déterminant l'état d'un véhicule sont par exemple :
- le fait que le verrou immobilise ou non un insert,
- le niveau de la batterie du véhicule partagé,
- le lieu où il est amarré (si le drapeau possède la valeur A ou B).

La mémoire de données 23 comporte également un troisième tableau TABLEAU 3 associant chaque abonné, son droit d'accès au service de mise à disposition de véhicule partage, et un compteur de temps de location. Ce troisième tableau TABLEAU 3 permet de vérifier qu'une personne qui se présente pour emprunter un véhicule a le droit de le prendre, et de comptabiliser le temps de location afin de facturer en fonction de la durée.

L'abonné communique avec le serveur 20 à travers le réseau téléphonique à l'aide d'un terminal portable 30, typiquement un téléphone portable. L'abonné peut également entrer en communication à l'aide d'un appareil téléphonique fixe (une cabine par exemple, ou un terminal de communication dédié au système et situé à proximité immédiate des stations d'amarrage.

Dans le cas où l'abonné communique avec son terminal portable 30, une application peut être téléchargée pour faciliter les échanges d'information avec le serveur. Si le terminal portable est un modèle peu performant, alors la communication s'effectue par de simples messages, de type SMS par exemple.

Après avoir détaillé les principaux éléments du système de mise à disposition de véhicules partagés, nous allons maintenant expliciter comment ceux-ci coopèrent.

### 5.2 EMPRUNT D'UN VEHICULE

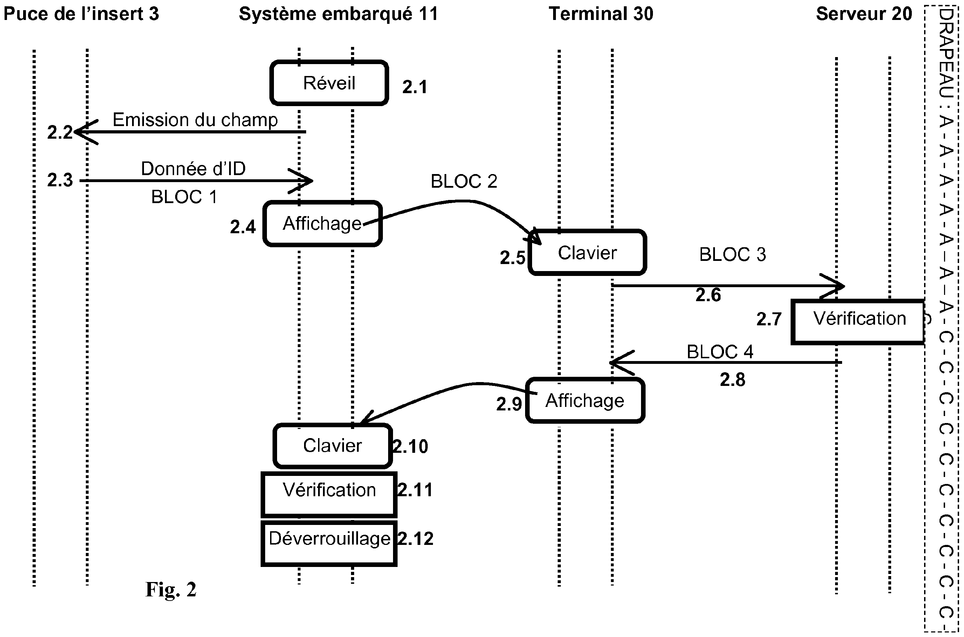

Décrivons d'abord le cas où un abonné désire emprunter un véhicule partagé. Ce mode de fonctionnement est explicité par la **Fig.2****.** A l'étape 2.1, l'abonné s'approche d'un véhicule amarré à un objet fixe situé à un certain endroit et appuie sur un bouton de son interface utilisateur pour réveiller l'unité centrale du système embarqué 11. L'unité centrale effectue alors un auto-test et émet un champ électromagnétique pour entrer en communication avec la puce de l'insert 3 glissé dans le verrou 13 (étape 2.2). A l'étape 2.3, le système embarqué reçoit un bloc de donnée BLOC1 comprenant l'identifiant du véhicule qui peut éventuellement être le même que celui de l'insert de la chaîne mobile 41 et éventuellement une donnée applicative. Puis (étape 2.4), le système embarqué affiche sur l'écran de l'interface utilisateur un message demandant à l'abonné de transmettre une information contenant au moins un bloc de donnée BLOC2 qui comporte au moins les données suivantes :
- identifiant du véhicule 10,
- état du véhicule 10 (par exemple : % batterie, présence de la chaîne, état mécanique, avis donné par l'abonné, ...ces données étant optionnelles)

A l'étape 2.5, l'abonné introduit sur le clavier de son terminal portable 30 l'information affichée. Le terminal portable 30 concatène cette information avec une donnée identifiant l'abonné, et transmet le bloc BLOC3 ainsi constitué au serveur distant 20 via le réseau téléphonique (étape 2.6). Si l'abonné utilise un appareil de communication fixe, il doit également introduire son identifiant. Selon une variante de réalisation, le système embarqué possède un moyen de communication à faible portée avec les terminaux portables 30, par NFC ou Bluetooth par exemple. Il suffit alors que l'abonné approche son terminal du système embarqué 11 pour transmettre le bloc de données BLOC3.

Le serveur 20 reçoit le bloc de donnée BLOC3, et en utilisant l'identifiant du véhicule 10, lit la valeur du drapeau pour vérifier qu'il est bien à la valeur « A ». Si ce n'est pas le cas (par exemple, le véhicule est en cours de location - valeur « C » ou en maintenance - valeur « D »), le serveur renvoie au terminal un message indiquant que l'emprunt de ce véhicule n'est pas possible. Si le drapeau est bien à la valeur « A », le serveur 20 vérifie que cet abonné a les droits pour emprunter un véhicule (étape 2.7). Si ce n'est pas le cas, le serveur renvoie au terminal un message indiquant que l'emprunt d'un véhicule n'est pas autorisé. Si l'abonné a accès au service, alors le serveur 20 vérifie que le véhicule 10 est opérationnel et n'est pas réservé, si oui alors à l'étape 2.8, il renvoie un bloc de donnée BLOC4 contenant un code d'autorisation qui est fonction de l'identifiant du véhicule et de la donnée émise par la puce électronique contenue dans l'insert 3. En même temps que l'émission de BLOC4, la location commence et le compteur de location associé à cet abonné est démarré pour comptabiliser le temps de location. Le bloc de donnée BLOC4 est reçu par le terminal portable 30 et affichée sous forme d'un message composé d'une série de caractères numériques (étape 2.9). A l'étape 2.10, l'abonné introduit alors ce message sur le pavé numérique de l'interface utilisateur du véhicule 10. En variante, l'écran du terminal portable propose à l'abonné d'approcher l'appareil du système embarqué de façon à transmettre le bloc de données BLOC4 par liaison à faible portée.

Une fois les données reçues, le système embarqué vérifie que l'identifiant du véhicule 10 est bien présent dans le bloc de données introduit au niveau du système embarqué (étape 2.11). Si c'est le cas, cela signifie que ces données sont bien destinées à ce véhicule et à l'étape 2.12, l'unité centrale émet un signal qui déverrouille le verrou 13 libérant l'insert 3 glissé à l'intérieur, et l'abonné peut prendre le véhicule en rangeant dans un coffre 1 chaîne mobile. Si ce n'est pas le cas, un message d'erreur est affiché sur l'interface utilisateur du système embarqué. On peut noter que la plupart des données transmises peuvent être chiffrées selon une technique connue en soi, ceci afin d'améliorer la sécurité.

Selon un perfectionnement, l'abonné peut entrer en communication avec le serveur 20 pour réserver un véhicule. Pour cela, il indique le lieu où il souhaite prendre ce véhicule et à quel moment cet événement intervient. Le serveur recherche dans le tableau TABLEAU 1 les véhicules dont le drapeau possède la valeur A, et dont la puce de l'insert glissé dans son verrou se trouve à proximité immédiate du lieu indiqué (en utilisant un second tableau TABLEAU 2). Un fois un véhicule trouvé, le serveur transmet son identifiant à cet abonné en indiquant sa disponibilité et sa localisation précise (c'est à dire le lieu du point fixe d'amarrage), et réserve ce véhicule en affectant la valeur « B » à son drapeau. Avantageusement, la location de ce véhicule commence à ce moment.

### 5.3 IMMOBILISATION MOMENTANEE D'UN VEHICULE

Supposons qu'un abonné souhaite immobiliser momentanément son véhicule, sans arrêter la location. Dans ce cas, il extirpe la chaîne mobile 42 de son coffre, entoure avec elle un objet fixe et introduit l'insert dans le verrou. L'introduction de l'insert réveille le système embarqué qui lit alors le code émis par la puce de l'insert et le compare avec un code de référence identifiant la chaîne mobile de ce véhicule. Si les codes sont identiques, alors le verrouillage est déclenché et le véhicule est maintenant immobilisé. Si les codes ne sont pas identiques, alors le verrouillage n'est pas déclenché. De cette manière, le système interdit l'enfilade de véhicule où une chaîne d'un véhicule est introduite dans le verrou d'un autre véhicule.

Lorsque l'abonné veut reprendre son véhicule, il introduit un code de déblocage qui permet de débloquer le verrou. Si un autre usager, voyant ce véhicule immobilisé, décide de le louer, il applique la procédure décrite au chapitre 5.2 : il appuie sur un bouton du système embarqué qui émet et affiche alors le bloc de données BLOC2, ces données sont introduites au niveau de son terminal portable 30 et transmises au serveur. Le serveur lit dans sa mémoire que ce véhicule est en cours de location et émet un message sur le terminal portable 30 indiquant que ce véhicule n'est pas disponible.

### 5.3 RETOUR D'UN VEHICULE

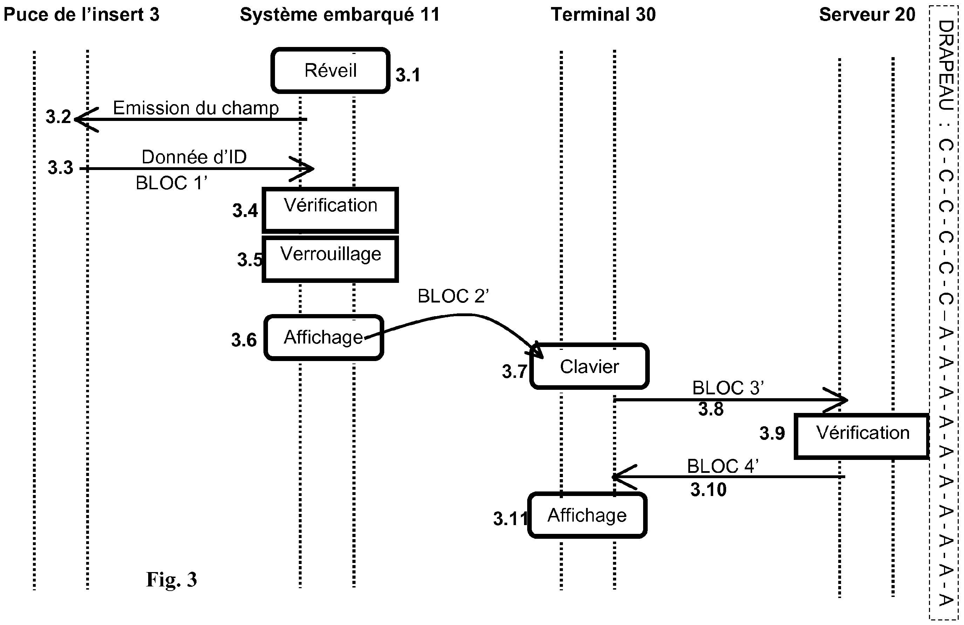

Décrivons maintenant le cas d'un abonné qui souhaite rendre un véhicule et faire cesser la location. Ce mode de fonctionnement est explicité par la **Fig.3****.** L'abonné s'approche d'un objet fixe, l'entoure avec la chaîne mobile 42 et introduit son insert dans le verrou électrique 13. L'introduction de l'insert réveille l'unité centrale du système embarqué 11 (étape 3.1). Un message apparaît sur l'écran qui demande si c'est une fin de location, l'utilisateur appuie alors sur un bouton pour confirmer cela. Le système embarqué émet un champ électromagnétique pour entrer en communication avec la puce de l'insert 3 (étape 3.2). A l'étape 3.3, le système embarqué reçoit un bloc de donnée BLOC1' comprenant l'identifiant de la puce et éventuellement une donnée applicative. Puis (étape 3.4), le système embarqué vérifie que l'identifiant de la puce (ou éventuellement la donnée applicative lue) correspond à celui de la chaîne mobile 422. Si ce n'est pas le cas, un message d'erreur est affiché et le système embarqué se met en veille au bout d'un temps prédéterminé, sans verrouiller l'insert. Si c'est le cas, alors à l'étape 3.5, le système embarqué bloque le verrou électrique 13 pour sécuriser le véhicule. Le système embarqué affiche alors sur l'UI (étape 3.6) un message demandant à l'abonné d'introduire un message sur son terminal portable 30 contenant un bloc de donnée BLOC2' qui comporte au moins les données suivantes :
- identifiant du véhicule 10,
- état du véhicule 10 (% batterie, présence de la chaîne, état mécanique, ...).

A l'étape 3.7, l'abonné introduit sur le clavier de son terminal portable 30 l'information affichée. Le terminal portable 30 concatène cette information avec une donnée identifiant l'abonné, et transmet le bloc BLOC3' ainsi constitué au serveur distant 20 via le réseau téléphonique (étape 3.8). Le serveur 20 reçoit le bloc de donnée BLOC3, et en utilisant l'identifiant du véhicule 10, lit la valeur du drapeau. Le véhicule étant en cours de location, sa valeur est « C », et le serveur en déduit que l'opération en cours est une fin de location. Le serveur vérifie alors que l'état du véhicule permet de le donner à un autre abonné (étape 3.9). Si ce n'est pas le cas, le serveur positionne le drapeau de ce véhicule à la valeur « D », sinon le drapeau est mis à la valeur « A ». A l'étape 3.10, le serveur renvoie un bloc de donnée BLOC4' contenant un code de verrouillage qui est fonction de l'identifiant du véhicule et de la donnée émise par la puce électronique de l'insert 3. Le bloc de donnée BLOC4' est reçu par le terminal portable 30 et affichée sous forme d'un message composé d'une série de caractères numériques (étape 3.11). Le bloc de données BLOC4' contient une information représentative d'une fin de location, et éventuellement le montant du ou débité du moyen de paiement de l'abonné. En variante, l'abonné approche son terminal portable du système embarqué de façon à pouvoir communiquer des informations par liaison à faible portée, par exemple le bloc de données BLOC2'.

La location est alors terminée, et le compteur de location associé à cet abonné est arrêté.

### 5.4 DESCRIPTION DU SYSTEME SELON UN SECOND MODE

On présente maintenant, également en relation avec la **fig. 1**, un schéma général d'un système de mise à la disposition de véhicules selon un second mode de réalisation. Selon ce second mode, le véhicule dispose toujours de sa propre chaine mobile d'amarrage et d'un verrou, il peut aussi être immobilisé à une chaîne fixe d'amarrage présente à une station d'amarrage géolocalisé. Le système selon ce second mode comporte donc au moins un point d'amarrage 15 situé à un endroit connu du système et doté d'une chaîne fixe d'amarrage 16 dont une extrémité possède un insert. 2. Ce point peut-être multiple au sein d'une station d'amarrage comportant une pluralité de chaînes d'amarrage 16. Chaque chaîne dispose en son extrémité d'un insert mécanique 3 du même type que celui au bout de la chaîne mobile 42. La station et les points d'amarrage ont la particularité de ne pas être alimentés électriquement, ce qui facilite grandement leurs installations. Il est ainsi possible de prévoir des points d'amarrage transportables, ces points étant placés à l'occasion d'un événement particulier et reste à cet endroit le temps de l'événement.

Le système comporte également un serveur distant 20, doté d'une unité centrale 21 exécutant au moins une application enregistrée dans une mémoire programme 22, l'unité centrale est relié à une mémoire de données 23 (typiquement un disque dur) et une interface d'entrée/sortie 24. Cette interface communique avec le réseau téléphonique représenté ici par une base fixe 25. De même que dans le cas du premier mode de réalisation, le serveur met à jour sa mémoire de données 23 en inscrivant l'état dans lequel le véhicule se trouve. Les paramètres déterminant l'état d'un véhicule sont par exemple :
- le fait que le verrou bloque ou non un insert,
- la présence ou l'absence de la chaîne mobile 41,
- le niveau de la batterie du véhicule partagé,
- le lieu où il est amarré (si le drapeau possède la valeur A ou B).

La mémoire de données 23 comporte le tableau TABLEAU 2 associant chaque identifiant de l'insert 3 de chaînes fixe d'amarrage à une donnée de localisation, c'est à dire l'endroit où se trouve le point d'amarrage qui possède la chaîne comportant cet insert.
la **Fig.2****.** décrit également les échanges réalisés selon ce second mode de réalisation. A l'étape 2.3, le système embarqué reçoit un bloc de donnée BLOC1 comprenant l'identifiant de la puce et éventuellement une donnée applicative. Le système embarqué détermine alors si l'insert introduit dans le verrou est celui :
- de la chaîne mobile 42 de ce véhicule,
- d'une chaîne fixe d'amarrage 16,
- d'une autre chaîne non référencée dans sa mémoire.

Dans les deux premiers cas, l'insert est verrouillé par la chaîne qui est reconnue par le système embarqué. A l'étape 2.4, le système embarqué affiche sur l'écran de l'interface utilisateur un message demandant à l'abonné de transmettre une information contenant au moins un bloc de donnée BLOC2 qui comporte au moins les données suivantes :
- donnée émise par la puce électronique de l'insert 3 de la chaine d'amarrage,
- identifiant du véhicule 10,
- état du véhicule 10 (par exemple : % batterie, présence de la chaîne, état mécanique, avis donné par l'abonné, ...ces données étant optionnelles).

A l'étape 2.5, l'abonné introduit sur le clavier de son terminal portable 30 l'information affichée. Le terminal portable 30 concatène cette information avec une donnée identifiant l'abonné, et transmet le bloc BLOC3 ainsi constitué au serveur distant 20 via le réseau téléphonique (étape 2.6). A la réception, le serveur 20 effectue les mêmes contrôles sur l'état du véhicule. Dans ce second mode de réalisation, le serveur lit le tableau TABLEAU 2 pour déterminer où se trouve amarrer le véhicule en utilisant le fait que chaque chaîne fixe d'amarrage est déjà géolocalisé. Lorsque, à l'étape 2.8, le serveur renvoie un bloc de donnée BLOC4 contenant un code d'autorisation, il enregistre le fait que la location commence et que ce véhicule n'est plus disponible.

Une fois les données BLOC4 reçues par le téléphone portable, l'abonné peut savoir sur son écran que la location vient de commencer. Comme le système embarqué a reconnu le code de l'insert de la chaîne qui actuellement immobilise le véhicule, il a déverrouillé le verrou de façon que l'abonné puisse prendre le véhicule.

Selon une variante de réalisation, le système embarqué ne possède pas en mémoire les codes des inserts des chaînes fixes d'amarrage 16. Dans ce cas, via le téléphone portable 30, le code lu de l'insert est transmis au serveur qui le contrôle et effectue la vérification. Selon cette variante, le serveur déclenche à distance le verrouillage par le BLOC4 qui, à l'étape 2.10, est introduite par l'abonné sur le pavé numérique de l'interface utilisateur du véhicule 10. Une fois le BLOC4 introduit, le système embarqué vérifie que l'identifiant du véhicule 10 est bien présent (étape 2.11) signifiant ainsi que ce message est bien destiné à ce véhicule et déverrouille le verrou 13 libérant l'insert 3 glissé à l'intérieur. Si ce n'est pas le cas, un message d'erreur est affiché sur l'interface utilisateur du système embarqué.

Selon un perfectionnement, si le serveur 20 constate que les données d'état du véhicule indiqué par cet abonné indique qu'il ne peut être donné à ce dernier, alors il en informe l'abonné et propose un autre véhicule. Pour cela, le serveur 20 extrait l'identifiant de la puce de l'insert et à l'aide du tableau TABLEAU 2, en déduit la localisation du véhicule désigné par cet abonné. Puis, le serveur recherche l'identifiant d'un autre véhicule dont le drapeau possède la valeur A et qui se situe au même endroit, ou à peu de distance. Une fois trouvé, le serveur 20 renvoie un message indiquant l'impossibilité de prendre ce véhicule, et propose l'identifiant de cet autre véhicule avec éventuellement une indication sur sa proximité. L'abonné voit s'afficher ce message sur l'écran de son téléphone portable 30 et se dirige vers cet autre véhicule pour renouveler l'opération d'emprunt d'un véhicule, cette opération ayant toutes les chances d'aboutir. Selon ce perfectionnement, l'identifiant de chaque véhicule est lisible par les abonnés, soit par une indication apposée sur le châssis du véhicule, soit par un message apparaissant sur l'interface utilisateur lorsque l'abonné appuie sur un bouton.

### 5.5 RETOUR D'UN VEHICULE A UNE STATION D'AMARRAGE

Décrivons maintenant le cas d'un abonné qui ramène un véhicule partagé à un point d'amarrage. Ce mode de fonctionnement est aussi explicité par la **Fig.3** avec quelques variantes. L'abonné s'approche d'un point d'amarrage 1 dont la chaîne d'amarrage 2 est libre et glisse son insert dans le verrou électrique 13. L'introduction de l'insert réveille l'unité centrale du système embarqué 11 (étape 3.1) qui émet alors un champ électromagnétique pour entrer en communication avec la puce de l'insert 3 (étape 3.2). A l'étape 3.3, le système embarqué reçoit un bloc de donnée BLOC1' comprenant l'identifiant de la puce et éventuellement une donnée applicative. Puis (étape 3.4), le système embarqué vérifie que l'identifiant de la puce (ou éventuellement la donnée applicative lue) correspond à celui associé à une chaîne d'amarrage 2. Si ce n'est pas le cas, un message d'erreur est affiché et le système embarqué s'arrête au bout d'un temps prédéterminé. Si c'est le cas, alors à l'étape 3.5, le système embarqué bloque le verrou électrique 13 pour sécuriser le véhicule. Le système embarqué affiche alors sur l'UI (étape 3.6) un message demandant à l'abonné d'introduire un message contenant un bloc de donnée BLOC2' qui comporte au moins les données suivantes :
- données émises par la puce électronique de l'insert 3 de la chaine d'amarrage,
- identifiant du véhicule 10,
- état du véhicule 10 (% batterie, présence de la chaîne, état mécanique, ...).

A l'étape 3.7, l'abonné introduit sur le clavier de son terminal portable 30 l'information affichée. Le terminal portable 30 concatène cette information avec une donnée identifiant l'abonné, et transmet le bloc BLOC3' ainsi constitué au serveur distant 20 via le réseau téléphonique (étape 3.8). Le serveur 20 reçoit le bloc de donnée BLOC3, et en utilisant l'identifiant du véhicule 10, lit la valeur du drapeau. Le véhicule étant en cours de location, sa valeur est « C », et le serveur en déduit que l'opération en cours est une fin de location. Le serveur vérifie alors que l'état du véhicule permet de le donner à un autre abonné (étape 3.9). Si ce n'est pas le cas, le serveur positionne le drapeau de ce véhicule à la valeur « D », sinon le drapeau est mis à la valeur « A ». A l'étape 3.10, le serveur renvoie un bloc de donnée BLOC4' contenant un code de verrouillage qui est fonction de l'identifiant du véhicule et de la donnée émise par la puce électronique de l'insert 3. Le bloc de donnée BLOC4' est reçu par le terminal portable 30 et affichée sous forme d'un message composé d'une série de caractères numériques (étape 3.11). Le bloc de données BLOC4' contient une information représentative d'une fin de location, et éventuellement le montant du ou débité du moyen de paiement de l'abonné. En variante, l'abonné approche son terminal portable du système embarqué de façon à pouvoir communiquer des informations par liaison à faible portée, par exemple le bloc de données BLOC2'.

La location est alors terminée, et le compteur de location associé à cet abonné est arrêté.

### 5.6 PRESENTATION DU SYSTEME EMBARQUE

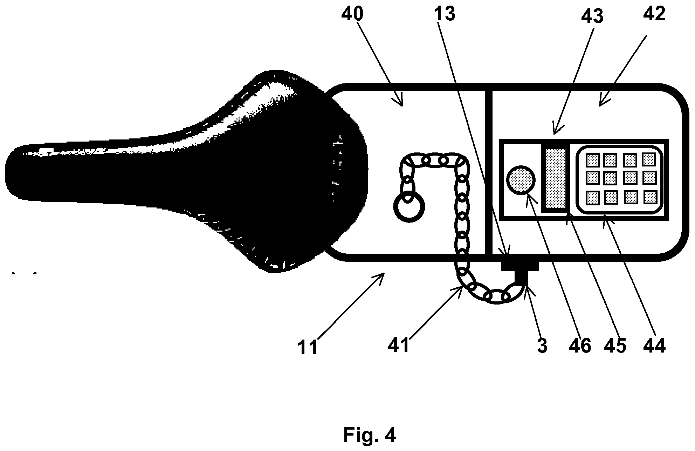

On présente maintenant, en relation avec la **fig. 4**, un schéma du système embarqué 11 vu du dessus comportant une chaîne mobile, selon un perfectionnement. Le système embarqué 11 se situe de préférence derrière et un peu en dessous de la selle, et se présente sous la forme d'un logement comportant plusieurs compartiments. Un premier compartiment 40 constitue une réserve ouverte vers le haut et destiné à contenir la chaîne mobile 41. Cette chaîne mobile se termine à une extrémité par un insert mécanique doté d'une puce. La chaîne mobile 41 permet à l'abonné d'amarrer le véhicule à n'importe objet fixe (un poteau, un arbre, un anneau d'ancrage, ...), le temps d'une course par exemple, son insert se glissant dans le verrou 13 du système embarqué. Selon une variante de réalisation, l'autre extrémité de la chaîne mobile 41 se termine par une boucle suffisamment large pour y faire passer cet insert et les maillons de la chaîne. Au moment de l'immobilisation du véhicule, la chaîne est enroulée autour d'un point fixe puis et l'insert est passée à travers la boucle avant d'être introduit dans le verrou.

Le second compartiment 42 contient une carte électronique supportant une unité centrale embarquée et une interface utilisateur UI1 43 en partie supérieure. Cette interface comprenant classiquement un clavier décimal 44 à touche capacitive, un écran 45 (deux lignes de 16 caractères par exemple) et un bouton poussoir 46. La batterie du système embarqué se loge de préférence dans la partie située en-dessous du premier compartiment et n'est de ce fait pas visible sur la **Fig. 4****.** L'unité centrale du système embarqué est réveillée par l'appui sur le bouton poussoir 46 ou par l'insertion d'un insert dans le verrou 13 à l'aide d'un contact mécanique sec. Dès son réveil, l'unité centrale émet un champ électromagnétique pour entrer en communication avec la puce de l'insert 3.

Selon une variante de réalisation, la chaîne mobile est dans le coffre et son insert n'est pas dans le verrou 13, l'abonné n'a donc pas besoin d'introduire un code pour le débloquer. Selon un second mode d'utilisation, l'insert de la chaîne mobile est dans le verrou, dans ce cas, arrivé à un endroit où il désire s'arrêter, l'abonné introduit sur le clavier décimal 44 un code simplifié pour ouvrir le verrou 13 et ainsi libérer la chaîne mobile 41. De cette façon et selon un perfectionnement, la chaîne mobile 41 est sécurisée. D'autres moyens mécaniques (cadenas) sont envisageables pour éviter le vol de la chaîne. L'abonné passe la chaîne autour de l'objet fixe, et introduit l'insert dans le verrou 13. L'unité centrale émet alors un champ électromagnétique pour entrer en communication avec la puce de l'insert 3 et capte le numéro d'identification de la puce de la chaîne mobile. En l'absence d'un numéro identifiant une puce d'une chaîne fixe d'amarrage, l'unité centrale en déduit que la location continue et qu'il n'y a pas lieu d'entrer en communication avec le serveur. L'unité centrale bloque alors le verrou 13 et le véhicule est immobilisé. Pour libérer le véhicule, l'abonné introduit un code simplifié sur le clavier 44 qui déclenche l'émission par l'unité centrale d'un signal de déverrouillage du verrou 13. Le code simplifié est par exemple, les quatre premiers chiffres du code du BLOC4 de données qui est présenté à l'abonné sur l'écran du terminal portable 30, lors de l'emprunt du véhicule.

Selon une alternative au fait que l'usager introduit une commande pour spécifier une fin de location, le système embarqué peut considéré que le fait d'introduire dans le verrou un insert d'une chaîne d'amarrage fixe signifie une fin de location. Lorsque l'unité centrale détecte dans le verrou 13 la présence d'un insert et lit le code d'une chaîne fixe d'amarrage 2, alors elle en déduit une fin de location.

Dans tout ce qui précède, chaque véhicule possède sa propre chaîne mobile, et son identifiant mémorisé dans la puce de l'insert est spécifique.

Lorsque l'abonné emprunte un véhicule, l'appui sur le bouton 46 déclenche l'affichage d'un message du type « Véhicule n°1234 - introduire code ». De cette façon, l'abonné peut vérifier que l'identifiant du véhicule réservé est bien celui indiqué sur l'écran de son terminal portable 30. Dans tous les cas, l'unité centrale du système embarqué 11 vérifie la présence de la chaîne mobile 41 avant d'accorder l'accès à ce véhicule. La présence ou l'absence de la chaîne mobile 41 est enregistrée par le serveur dans le tableau TABLEAU 1.

### 5.7 GEOLOCALISATION DES VEHICULES

Dans le cas où l'abonné termine sa location en laissant son véhicule immobilisé par une chaîne qui n'est pas géolocalisée, et selon un premier mode de réalisation, l'abonné déclare sur son téléphone portable l'endroit où le véhicule se trouve. Cet endroit peut par exemple être une station dotée de cerceaux 1 comme la **Fig. 1** le montre. Dans ce cas, l'introduction d'une commande sur l'interface utilisateur du système embarqué déclenche l'affichage d'un code à introduire sur le clavier du terminal portable. L'abonné introduit ce code sur son téléphone portable et ajoute une information de géolocalisation (par exemple la ville, la rue et le numéro dans cette rue, devant lequel le véhicule se trouve). A la réception, le serveur en déduit que c'est une fin de location et que le véhicule est désormais disponible à cet endroit.

Selon un perfectionnement, juste avant l'étape 3.7 où l'abonné introduit sur le clavier de son terminal portable 30 l'information affichée, celui-ci prend au moins une photographie du véhicule avec sa chaîne amarrée à un point fixe. La photographie est alors transmise avec les données BLOC3' et conservée comme élément de preuve de fin de location par le serveur. De cette manière, l'abonné peut prouver qu'il a été rigoureux lors du rendu du véhicule.

Selon une variante la géolocalisation d'un véhicule immobilisé consiste à utiliser le fait qu'il est attaché à une chaîne fixe d'amarrage et que le code émis par son insert est utilisable pour sa localisation.

Selon une autre variante de réalisation, l'introduction d'une commande sur l'interface utilisateur déclenche la géolocalisation du véhicule par un module intégré dans le système embarqué (du type GPS). L'information de géolocalisation produite par ledit module est communiquée au terminal portable (30) afin d'être transmise au serveur distant (20). Selon un perfectionnement, le système embarqué dispose aussi d'un module de communication (GSM, 3G, 4G, LTE,... par exemple) et transmet la géolocalisation donnée par le module intégré dans le système au serveur distant via le réseau téléphonique. Selon ce perfectionnement, le terminal portable 30 n'est plus nécessaire. Selon également ce perfectionnement, le système embarqué sait qu'il est ou non en location, et si un usager demande à le prendre, il peut tout de suite lui répondre s'il est disponible ou non.

## Revendications

1. Système de mise à la disposition de véhicules partagés **caractérisé en ce qu'**il comporte :
- au moins un véhicule partagé (10) possédant sa propre chaîne mobile d'amarrage se terminant à une extrémité par un insert mécanique (3) destiné à être inséré dans un verrou, ledit insert possédant une puce électronique contenant un identifiant de la puce électronique et embarquant un appareil (11) comportant une Interface Utilisateur (UI1), un moyen de lecture de puces électroniques et un verrou électrique (13) pour amarrer le véhicule à au moins un point fixe avec ladite chaîne mobile d'amarrage,
- au moins un terminal portable (30) doté d'un moyen de communication avec un serveur distant,
- un serveur distant (20) doté d'un moyen de chiffrement et d'une mémoire contenant des codes identifiant chaque véhicule,
le moyen de lecture lisant l'identifiant de la puce électronique émis par ladite puce électronique lorsque l'insert contenant la puce électronique est inséré dans le verrou, l'appareil embarqué (11) générant une information représentative de l'identifiant de la puce électronique contenue dans l'insert inséré dans le verrou et d'un identifiant du véhicule, l'introduction de ladite information au niveau du terminal portable (30) déclenchant sa transmission au serveur distant (20) via le moyen de communication, le serveur générant un code d'autorisation qui est au moins fonction de l'information transmise et de données secrètes mémorisées et associées au véhicule et transmettant sous forme chiffrée ce code d'autorisation vers le terminal portable, une action de l'utilisateur introduite au niveau de l'interface utilisateur déclenchant la transmission du code d'autorisation à l'appareil embarqué, la réception de ce code d'autorisation débloquant le verrou électrique (13),
dans lequel l'appareil embarqué possède une mémoire contenant au moins une pluralité d'identifiants de puces électroniques d'inserts de chaînes d'amarrage solidarisées à des points fixes, le verrou électrique étant configuré pour se verrouiller lorsque l'identifiant de la puce électronique de l'insert inséré dans le verrou électrique correspond à un dit identifiant de la puce électronique d'un insert d'une chaîne d'amarrage solidarisée à un point fixe, un écran (45) de l'interface utilisateur étant alors configuré pour afficher un code de fin de location que l'utilisateur transmet au serveur qui enregistre dans sa mémoire une information spécifiant que le véhicule se trouve amarré à cet endroit et autorise la location d'un véhicule à partir de cet endroit, et
dans lequel l'appareil embarqué est configuré pour ne pas verrouiller le verrou électrique sur l'insert introduit lorsque l'identifiant de la puce électronique ne correspond ni à une chaîne d'amarrage solidarisée à un endroit fixe, ni à la chaîne mobile d'amarrage du véhicule, l'appareil embarqué étant configuré, sur introduction d'un tel insert dont l'identifiant de la puce électronique n'est pas reconnu par l'appareil embarqué, pour déclencher l'affichage d'un message informant que le verrouillage n'est pas possible.

2. Système selon la revendication 1, **caractérisé en ce qu'**il comporte un moyen d'affichage de l'interface utilisateur (UI1) affichant l'information représentative de la donnée lue et de l'identifiant du véhicule (10), et un clavier au niveau du terminal portable (30) pour introduire manuellement ladite information affichée.

3. Système selon la revendication 1, **caractérisé en ce que** l'introduction de l'information représentative de la donnée lue et de l'identifiant du véhicule s'effectue en approchant le terminal portable (30) de l'interface utilisateur (UI1) déclenchant l'établissement d'une communication sans contact avec le terminal portable et la transmission de ladite information à ce terminal portable.

4. Système selon l'une quelconque des revendications précédentes, **caractérisé en ce que** lors de l'introduction de l'insert dans le verrou, l'appareil (1) compare le code émis par la puce de l'insert avec un code de référence identifiant de la puce électronique de la chaîne mobile de ce véhicule, et déclenche le verrouillage de l'insert lorsque les codes sont identiques.

5. Système selon l'une quelconque des revendications précédentes, **caractérisé en ce que** l'introduction d'une commande sur l'interface utilisateur déclenche l'affichage d'un code à introduire sur le clavier du terminal portable, ladite introduction du code déclenchant la géolocalisation du portable par un module intégré et l'émission vers le serveur d'un message indiquant une fin de location en spécifiant où se trouve le véhicule.

6. Système selon l'une quelconque des revendications 1 à 4, **caractérisé en ce que** l'introduction d'une commande sur l'interface utilisateur déclenche l'affichage d'un code à introduire sur le clavier du terminal portable, ladite introduction du code déclenchant l'apparition d'un menu permettant d'introduire manuellement une information de géolocalisation et l'émission vers le serveur d'un message indiquant une fin de location en spécifiant où se trouve le véhicule.

7. Système selon l'une quelconque des revendications 1 à 4, **caractérisé en ce que** l'introduction d'une commande sur l'interface utilisateur déclenche la géolocalisation du véhicule par un module intégré dans l'appareil (1), l'information de géolocalisation produite par ledit module étant communiquée au terminal portable (30) afin d'être transmise au serveur distant (20).

8. Système selon l'une quelconque des revendications 5 à 7, **caractérisé en ce que** ledit serveur (20) enregistre dans sa mémoire une information spécifiant que le véhicule est disponible pour un nouvel emprunt et qu'il est disponible à l'endroit indiqué par l'information de géolocalisation transmise.

9. Système selon l'une quelconque des revendications précédentes, **caractérisé en ce qu'**il comporte en outre une étape de prise d'au moins une photographie du véhicule avec sa chaîne amarrée à un point fixe, la photographie étant transmise au serveur et enregistrée dans la mémoire.

10. Système selon la revendication 1, **caractérisé en ce que**, lorsque l'identifiant de la puce électronique de l'insert inséré dans le verrou électrique correspond à celui de la chaîne mobile d'amarrage du véhicule, l'appareil embarqué est configuré pour verrouiller le verrou électrique et n'entre pas en communication avec le serveur distant (20).

11. Système selon l'une quelconque des revendications précédentes, **caractérisé en ce que** le serveur (20) possède un moyen de réception d'une demande de réservation d'un véhicule partagé actuellement amarré à un point géolocalisé et un moyen d'écriture dans la mémoire associée à ce véhicule pour indiquer que ce véhicule est réservé, la réception venant d'un terminal portable (30) d'une information représentative d'une donnée lue et de l'identifiant d'un véhicule déclenchant un message vers ce terminal portable signifiant que ledit véhicule est réservé et inhibant la transmission par le serveur du code d'autorisation.

12. Système selon la revendication 11, **caractérisé en ce que** le message transmis par le serveur (20) comporte en outre un identifiant d'un autre véhicule (10) partagé disponible se trouvant à proximité du véhicule partagé et réservé, le serveur ne transmettant pas alors de code d'autorisation, l'identifiant de cet autre véhicule étant affiché sur l'écran du terminal portable.

13. Procédé de mise à disposition de véhicules partagés (10) mis en oeuvre dans un système **caractérisé en ce qu'**il comporte :
- au moins un véhicule partagé (10) possédant sa propre chaîne mobile d'amarrage se terminant à une extrémité par un insert mécanique destiné à être inséré dans un verrou, ledit insert possédant une puce électronique contenant un identifiant de la puce électronique et embarquant un appareil comportant une Interface Utilisateur (UI1), un moyen de lecture des puces électroniques, et un verrou électrique pour amarrer le véhicule avec sa propre chaîne mobile d'amarrage à un point fixe,
- au moins un terminal portable (30) de communication doté d'un moyen de communication avec un serveur distant,
- un serveur distant (20) doté d'un moyen de chiffrement et d'une mémoire contenant des codes identifiant au moins chaque puce dans l'insert des chaînes mobiles de chaque véhicule,
le procédé comportant les étapes suivantes :
- lecture (2.2, 2.3) par le moyen de lecture de l'appareil embarqué de l'identifiant de la puce électronique émis par ladite puce électronique lorsque l'insert contenant la puce électronique est inséré dans le verrou,
- génération au sein de l'appareil embarqué d'une information (BLOC2) représentative de l'identifiant de la puce électronique et d'un identifiant du véhicule,
- introduction (2.5) de ladite information au niveau du terminal portable déclenchant la transmission (2.6) de l'information représentative du véhicule partagé vers le serveur distant,
- génération par le serveur d'un code d'autorisation (BLOC4) qui est fonction au moins de l'information transmise et de données secrètes mémorisées associées au véhicule, et transmission (2.8) sous forme chiffrée dudit code d'autorisation vers le terminal portable,
- introduction (2.10) d'une action de l'utilisateur au niveau de l'interface utilisateur déclenchant la transmission du code d'autorisation à l'appareil embarqué,
- réception du code d'autorisation au niveau du véhicule déclenchant le déblocage du verrou électrique (2.12),
dans lequel l'appareil embarqué possède une mémoire contenant au moins une pluralité d'identifiants de puces électroniques d'inserts de chaînes d'amarrage solidarisées à des points fixes, le procédé comprenant en outre :
- verrouillage du verrou électrique lorsque l'identifiant de la puce électronique de l'insert inséré dans le verrou électrique correspond à un dit identifiant de la puce électronique d'un insert d'une chaîne d'amarrage solidarisée à un point fixe, un écran (45) de l'interface utilisateur affichant alors un code de fin de location que l'utilisateur transmet au serveur qui enregistre dans sa mémoire une information spécifiant que le véhicule se trouve amarré à cet endroit et autorise la location d'un véhicule à partir de cet endroit, et
- non verrouillage du verrou électrique sur l'insert introduit lorsque l'identifiant de la puce électronique ne correspond ni à une chaîne d'amarrage solidarisée à un endroit fixe, ni à la chaîne mobile d'amarrage du véhicule, l'appareil embarqué déclenchant, sur introduction d'un tel insert dont l'identifiant de la puce électronique n'est pas reconnu par l'appareil embarqué, l'affichage d'un message informant que le verrouillage n'est pas possible.

14. Véhicule partagé (10) doté d'un appareil embarqué comportant :
- une Interface Utilisateur (UI1),
- une propre chaîne mobile d'amarrage se terminant à une extrémité par un insert mécanique destiné à être inséré dans un verrou, ledit insert possédant une puce électronique contenant un identifiant de la puce électronique,
- un moyen de lecture de puces électroniques,
- un verrou électrique (13) configuré pour immobiliser le véhicule à un endroit déterminé par introduction dudit insert mécanique et fermeture du verrou,
- une unité de contrôle émettant un signal de changement d'état d'un verrou électrique pour libérer et verrouiller l'insert mécanique,
ledit véhicule partagé étant **caractérisé en ce que** le moyen de lecture lit l'identifiant de la puce électronique émis par la puce électronique lorsque l'insert contenant la puce électronique est inséré dans le verrou, l'unité de contrôle générant une information représentative de l'identifiant de la puce électronique et d'un identifiant du véhicule, une action introduite sur l'interface utilisateur (UI1) déclenchant la transmission de l'information représentative au serveur à l'aide d'un moyen de communication d'un terminal portable, la réception en retour au niveau du véhicule à l'aide dudit moyen de communication dudit terminal portable d'un code qui est au moins fonction de la donnée d'identification changeant l'état de son verrou électrique,
l'appareil embarqué possédant une mémoire contenant au moins une pluralité d'identifiants de puces électroniques d'inserts de chaînes d'amarrage solidarisées à des points fixes, le verrou électrique étant configuré pour se verrouiller lorsque l'identifiant de la puce électronique de l'insert inséré dans le verrou électrique correspond à un dit identifiant de la puce électronique d'un insert d'une chaîne d'amarrage solidarisée à un point fixe, un écran (45) de l'interface utilisateur étant alors configuré pour afficher un code de fin de location que l'utilisateur transmet au serveur qui enregistre dans sa mémoire une information spécifiant que le véhicule se trouve amarré à cet endroit et autorise la location d'un véhicule à partir de cet endroit, et
dans lequel l'appareil embarqué est configuré pour ne pas verrouiller le verrou électrique sur l'insert introduit lorsque l'identifiant de la puce électronique ne correspond ni à une chaîne d'amarrage solidarisée à un endroit fixe, ni à la chaîne mobile d'amarrage du véhicule, l'appareil embarqué étant configuré, sur introduction d'un tel insert dont l'identifiant de la puce électronique n'est pas reconnu par l'appareil embarqué, pour déclencher l'affichage d'un message informant que le verrouillage n'est pas possible.

## Patentansprüche

1. System zur Bereitstellung von gemeinsam genutzten Fahrzeugen, **dadurch gekennzeichnet, dass** es umfasst:
- mindestens ein gemeinsam genutztes Fahrzeug (10), das seine eigene bewegliche Andockkette besitzt, die an einem Ende in einem mechanischen Einsatz (3) endet, der in ein Schloss eingesetzt werden soll, wobei der Einsatz einen Mikrochip besitzt, der eine Kennung des Mikrochips enthält, und ein Gerät (11) mit einer Benutzerschnittstelle (UI1), einem Mittel zum Lesen von Mikrochips und einem elektrischen Schloss (13) zum Andocken des Fahrzeugs an mindestens einem festen Punkt mit der beweglichen Andockkette an Bord hat,
- mindestens ein tragbares Endgerät (30), das über Mittel zur Kommunikation mit einem entfernten Server verfügt,
- einen entfernten Server (20) mit einem Verschlüsselungsmittel und einem Speicher, der Codes enthält, die jedes Fahrzeug identifizieren,
das Lesemittel die Kennung des Mikrochips liest, die von dem Mikrochip ausgegeben wird, wenn der den Mikrochip enthaltende Einsatz in das Schloss eingeführt wird, das Bordgerät (11) eine Information erzeugt, die für die Kennung des Mikrochips, der in dem in das Schloss eingeführten Einsatz enthalten ist, und für eine Kennung des Fahrzeugs repräsentativ ist, die Eingabe der Information am tragbaren Endgerät (30) ihre Übertragung an den entfernten Server (20) über das Kommunikationsmittel auslöst, der Server einen Autorisierungscode erzeugt, der zumindest von der übertragenen Information und von gespeicherten und dem Fahrzeug zugeordneten geheimen Daten abhängig ist, und diesen Autorisierungscode in verschlüsselter Form an das tragbare Terminal überträgt, wobei eine an der Benutzerschnittstelle eingegebene Benutzeraktion die Übertragung des Autorisierungscodes an das Bordgerät auslöst, wobei der Empfang dieses Autorisierungscodes das elektrische Schloss (13) freigibt,
wobei das Fahrzeuggerät einen Speicher besitzt, der mindestens eine Vielzahl von Kennungen von elektronischen Chips von Einsätzen von Verankerungsketten enthält, die an festen Punkten befestigt sind, wobei das elektrische Schloss so konfiguriert ist, dass es sich verriegelt, wenn die Kennung des elektronischen Chips des Einsatzes, der in das elektrische Schloss eingeführt wird, mit einer der genannten Kennungen des elektronischen Chips eines Einsatzes einer Verankerungskette übereinstimmt, die an einem festen Punkt befestigt ist, ein Bildschirm (45) der Benutzerschnittstelle so konfiguriert ist, dass er einen Code für das Ende der Vermietung anzeigt, den der Benutzer an den Server übermittelt, der in seinem Speicher eine Information speichert, die angibt, dass das Fahrzeug an diesem Ort festgemacht ist, und die Vermietung eines Fahrzeugs von diesem Ort aus zulässt, und
bei dem das Bordgerät so konfiguriert ist, dass es das elektrische Schloss an dem eingeführten Einsatz nicht verriegelt, wenn die Kennung des elektronischen Chips weder einer an einem festen Ort befestigten Andockkette noch der beweglichen Andockkette des Fahrzeugs entspricht, wobei das Bordgerät bei Einführung eines solchen Einsatzes, dessen Kennung des elektronischen Chips von dem Bordgerät nicht erkannt wird, so konfiguriert ist, dass es die Anzeige einer Meldung auslöst, die darüber informiert, dass die Verriegelung nicht möglich ist.

2. System nach Anspruch 1, **dadurch gekennzeichnet, dass** es ein Anzeigemittel der Benutzerschnittstelle (UI1), das die Information anzeigt, die die ausgelesenen Daten und die Kennung des Fahrzeugs (10) repräsentiert, und eine Tastatur am tragbaren Terminal (30) zur manuellen Eingabe der angezeigten Information umfasst.

3. System nach Anspruch 1, **dadurch gekennzeichnet, dass** die Eingabe der Information, die die gelesenen Daten und die Fahrzeugkennung repräsentiert, durch Annäherung des tragbaren Endgeräts (30) an die Benutzerschnittstelle (UI1) erfolgt, die den Aufbau einer kontaktlosen Kommunikation mit dem tragbaren Endgerät und die Übertragung der Information an dieses tragbare Endgerät auslöst.

4. System nach einem der vorhergehenden Ansprüche, **dadurch gekennzeichnet, dass** das Gerät (1) bei der Einführung des Einsatzes in das Schloss den vom Chip des Einsatzes ausgegebenen Code mit einem identifizierenden Referenzcode des elektronischen Chips der beweglichen Kette dieses Fahrzeugs vergleicht und die Verriegelung des Einsatzes auslöst, wenn die Codes identisch sind.

5. System nach einem der vorhergehenden Ansprüche, **dadurch gekennzeichnet, dass** die Eingabe eines Befehls auf der Benutzeroberfläche die Anzeige eines Codes auslöst, der auf der Tastatur des Handterminals eingegeben werden muss, wobei die Eingabe des Codes die Geolokalisierung des Handterminals durch ein integriertes Modul und die Übertragung einer Nachricht an den Server auslöst, die ein Ende der Miete anzeigt, indem sie angibt, wo sich das Fahrzeug befindet.

6. System nach einem der Ansprüche 1 bis 4, **dadurch gekennzeichnet, dass** die Eingabe eines Befehls auf der Benutzerschnittstelle die Anzeige eines Codes auslöst, der auf der Tastatur des tragbaren Terminals eingegeben werden muss, wobei die Eingabe des Codes das Erscheinen eines Menüs auslöst, das die manuelle Eingabe einer Geolokalisierungsinformation ermöglicht, und das Senden einer Nachricht an den Server, die ein Ende der Vermietung anzeigt, indem sie angibt, wo sich das Fahrzeug befindet.

7. System nach einem der Ansprüche 1 bis 4, **dadurch gekennzeichnet, dass** die Eingabe eines Befehls auf der Benutzerschnittstelle die Geolokalisierung des Fahrzeugs durch ein in das Gerät (1) integriertes Modul auslöst, wobei die von dem Modul erzeugte Geolokalisierungsinformation an das tragbare Endgerät (30) übermittelt wird, um an den entfernten Server (20) weitergeleitet zu werden.

8. System nach einem der Ansprüche 5 bis 7, **dadurch gekennzeichnet, dass** der Server (20) in seinem Speicher eine Information speichert, die angibt, dass das Fahrzeug für eine neue Ausleihe verfügbar ist und dass es an dem Ort verfügbar ist, der durch die übermittelte Geolokalisierungsinformation angegeben wird.

9. System nach einem der vorhergehenden Ansprüche, **dadurch gekennzeichnet, dass** es außerdem einen Schritt umfasst, in dem mindestens eine Fotografie des Fahrzeugs mit seiner an einem festen Punkt angelegten Kette aufgenommen wird, wobei die Fotografie an den Server übertragen und im Speicher abgelegt wird.

10. System nach Anspruch 1, **dadurch gekennzeichnet, dass**, wenn die Kennung des Mikrochips des in das elektrische Schloss eingefügten Einsatzes mit der Kennung der mobilen Andockkette des Fahrzeugs übereinstimmt, das Bordgerät so konfiguriert ist, dass es das elektrische Schloss verriegelt und nicht mit dem entfernten Server (20) kommuniziert.

11. System nach einem der vorhergehenden Ansprüche, **dadurch gekennzeichnet, dass** der Server (20) ein Mittel zum Empfangen einer Reservierungsanfrage für ein gemeinsam genutztes Fahrzeug, das derzeit an einem geolokalisierten Punkt angedockt ist, und ein Mittel zum Schreiben in den mit diesem Fahrzeug verbundenen Speicher hat, um anzuzeigen, dass dieses Fahrzeug reserviert ist, Der Empfang einer Information von einem tragbaren Endgerät (30), die für eine gelesene Angabe und die Kennung eines Fahrzeugs repräsentativ ist, löst eine Nachricht an dieses tragbare Endgerät aus, die angibt, dass das Fahrzeug reserviert ist, und die Übertragung des Autorisierungscodes durch den Server verhindert.

12. System nach Anspruch 11, **dadurch gekennzeichnet, dass** die vom Server (20) übertragene Nachricht außerdem eine Kennung eines anderen verfügbaren geteilten Fahrzeugs (10) enthält, das sich in der Nähe des geteilten und gebuchten Fahrzeugs befindet, wobei der Server dann keinen Autorisierungscode überträgt, wobei die Kennung dieses anderen Fahrzeugs auf dem Bildschirm des tragbaren Endgeräts angezeigt wird.

13. Verfahren zur Bereitstellung von geteilten Fahrzeugen (10), das in einem System implementiert wird, **dadurch gekennzeichnet, dass** es umfasst:
- mindestens ein gemeinsam genutztes Fahrzeug (10), das seine eigene bewegliche Andockkette besitzt, die an einem Ende in einem mechanischen Einsatz endet, der dazu bestimmt ist, in ein Schloss eingesetzt zu werden, wobei der Einsatz einen Mikrochip besitzt, der eine Kennung des Mikrochips enthält und ein Gerät mit einer Benutzerschnittstelle (UI1), einem Mittel zum Lesen von Mikrochips und einem elektrischen Schloss mitführt, um das Fahrzeug mit seiner eigenen beweglichen Andockkette an einem festen Punkt anzudocken,
- mindestens ein tragbares Kommunikationsterminal (30), das mit Mitteln zur Kommunikation mit einem entfernten Server ausgestattet ist,
- einen entfernten Server (20) mit einem Verschlüsselungsmittel und einem Speicher, der Codes enthält, die mindestens jeden Chip in der Einlage der beweglichen Ketten jedes Fahrzeugs identifizieren,
wobei das Verfahren die folgenden Schritte umfasst:
- Lesen (2.2, 2.3) durch das Lesemittel des Bordgeräts der Kennung des Mikrochips, die von dem Mikrochip ausgegeben wird, wenn der Einsatz, der den Mikrochip enthält, in das Schloss eingeführt wird,
- Generierung innerhalb des Bordgeräts einer Information (BLOCK2), die für die Kennung des Mikrochips und eine Kennung des Fahrzeugs repräsentativ ist,
- Eingabe (2.5) der genannten Information am tragbaren Terminal, die die Übertragung (2.6) der für das gemeinsam genutzte Fahrzeug repräsentativen Information an den entfernten Server auslöst,
- Erzeugen eines Autorisierungscodes (BLOC4) durch den Server, der zumindest von der übertragenen Information und von gespeicherten geheimen Daten, die dem Fahrzeug zugeordnet sind, abhängig ist, und Übertragen (2.8) in verschlüsselter Form des Autorisierungscodes an das tragbare Endgerät,
- Eingabe (2.10) einer Benutzeraktion an der Benutzerschnittstelle, die die Übertragung des Autorisierungscodes an das Bordgerät auslöst,
- Empfang des Autorisierungscodes am Fahrzeug, der die Freigabe der elektrischen Verriegelung auslöst (2.12),
wobei das Bordgerät einen Speicher besitzt, der mindestens eine Vielzahl von Chip-Identifikatoren von Einsätzen von an Festpunkten befestigten Andockketten enthält, wobei das Verfahren außerdem umfasst:
- Verriegeln des elektrischen Schlosses, wenn die Kennung des elektronischen Chips des in das elektrische Schloss eingefügten Einsatzes mit einer solchen Kennung des elektronischen Chips eines Einsatzes einer an einem festen Punkt befestigten Verankerungskette übereinstimmt, wobei ein Bildschirm (45) der Benutzerschnittstelle dann einen Code für das Ende der Vermietung anzeigt, den der Benutzer an den Server übermittelt, der in seinem Speicher eine Information speichert, die angibt, dass das Fahrzeug an diesem Ort vertäut ist, und die Vermietung eines Fahrzeugs von diesem Ort aus zulässt, und
- Nichtverriegelung des elektrischen Schlosses an dem eingeführten Einsatz, wenn die Kennung des Mikrochips weder einer an einem festen Ort befestigten Andockkette noch der beweglichen Andockkette des Fahrzeugs entspricht, wobei das Bordgerät bei Einführung eines solchen Einsatzes, dessen Kennung des Mikrochips vom Bordgerät nicht erkannt wird, die Anzeige einer Meldung auslöst, die darüber informiert, dass die Verriegelung nicht möglich ist.

14. Gemeinsam genutztes Fahrzeug (10) mit einem Bordgerät, das Folgendes umfasst:
- eine Benutzeroberfläche (UI1),
- eine eigene bewegliche Andockkette, die an einem Ende mit einem mechanischen Einsatz zum Einsetzen in ein Schloss endet, wobei der Einsatz einen Mikrochip besitzt, der eine Kennung des Mikrochips enthält,
- ein Mittel zum Lesen von Mikrochips,
- ein elektrisches Schloss (13), das so konfiguriert ist, dass es das Fahrzeug an einer bestimmten Stelle durch Einführen des mechanischen Einsatzes und Schließen des Schlosses festhält,
- eine Steuereinheit, die ein Signal für die Änderung des Zustands eines elektrischen Riegels ausgibt, um den mechanischen Einsatz freizugeben und zu verriegeln,
wobei das gemeinsam genutzte Fahrzeug **dadurch gekennzeichnet ist, dass** das Lesemittel die Kennung des Mikrochips liest, die von dem Mikrochip ausgegeben wird, wenn der den Mikrochip enthaltende Einsatz in das Schloss eingeführt wird, wobei die Steuereinheit eine Information erzeugt, die die Kennung des Mikrochips und eine Kennung des Fahrzeugs repräsentiert, wobei eine an der Benutzerschnittstelle (UI1) eingegebene Aktion die Übertragung der repräsentativen Information an den Server mit Hilfe eines Kommunikationsmittels eines mobilen Endgeräts auslöst,
Rückempfang am Fahrzeug mithilfe der Kommunikationsmittel des tragbaren Terminals eines Codes, der zumindest von den Identifikationsdaten abhängig ist, die den Zustand seines elektrischen Schlosses ändern,
das Fahrzeuggerät einen Speicher besitzt, der mindestens eine Vielzahl von Chip-Kennungen von Einsätzen von Verankerungsketten enthält, die an festen Punkten befestigt sind, wobei das elektrische Schloss so konfiguriert ist, dass es sich verriegelt, wenn die Chip-Kennung des Einsatzes, der in das elektrische Schloss eingeführt wird, mit einer besagten Chip-Kennung eines Einsatzes einer Verankerungskette übereinstimmt, die an einem festen Punkt befestigt ist, ein Bildschirm (45) der Benutzerschnittstelle so konfiguriert ist, dass er einen Code für das Ende der Vermietung anzeigt, den der Benutzer an den Server übermittelt, der in seinem Speicher eine Information speichert, die angibt, dass das Fahrzeug an dieser Stelle festgemacht ist, und die Vermietung eines Fahrzeugs von dieser Stelle aus zulässt, und
bei dem das Bordgerät so konfiguriert ist, dass es das elektrische Schloss an dem eingeführten Einsatz nicht verriegelt, wenn die Kennung des elektronischen Chips weder einer an einem festen Ort befestigten Andockkette noch der beweglichen Andockkette des Fahrzeugs entspricht, wobei das Bordgerät bei Einführung eines solchen Einsatzes, dessen Kennung des elektronischen Chips von dem Bordgerät nicht erkannt wird, so konfiguriert ist, dass es die Anzeige einer Meldung auslöst, die darüber informiert, dass die Verriegelung nicht möglich ist.

## Claims

1. System for making shared vehicles available, **characterised in that** it comprises :
- at least one shared vehicle (10) having its own mobile docking chain terminating at one end in a mechanical insert (3) intended to be inserted in a lock, said insert having an electronic chip containing an identifier of the electronic chip and carrying an apparatus (11) comprising a User Interface (UI1), a means of reading electronic chips, and an electrical lock (13) for docking the vehicle to at least one fixed point with said mobile docking chain,
- at least one portable terminal (30) equipped with a means of communication with a remote server,
- a remote server (20) equipped with encryption means and a memory containing codes identifying each vehicle,
the reading means reading the identifier of the electronic chip emitted by said electronic chip when the insert containing the electronic chip is inserted in the lock, the on-board device (11) generating information representative of the identifier of the electronic chip contained in the insert inserted in the lock and of an identifier of the vehicle, the introduction of said information at the portable terminal (30) triggering its transmission to the remote server (20) via the communication means, the server generating an authorisation code which is at least a function of the information transmitted and of secret data stored and associated with the vehicle, and transmitting this authorisation code in encrypted form to the portable terminal, a user action entered at the user interface triggering transmission of the authorisation code to the on-board device, reception of this authorisation code unlocking the electric lock (13),
in which the on-board device has a memory containing at least one plurality of identifiers of electronic chips of mooring chain inserts secured to fixed points, the electric lock being configured to lock when the identifier of the electronic chip of the insert inserted in the electric lock corresponds to a said identifier of the electronic chip of an insert of a mooring chain secured to a fixed point, a screen (45) of the user interface then being configured to display an end of rental code that the user transmits to the server, which stores in its memory information specifying that the vehicle is moored at this location and authorises the rental of a vehicle from this location, and
in which the on-board device is configured so as not to lock the electrical lock on the inserted insert when the identifier of the electronic chip corresponds neither to a securing chain secured to a fixed location, nor to the mobile securing chain of the vehicle, the on-board device being configured, on insertion of such an insert whose identifier of the electronic chip is not recognised by the on-board device, so as to trigger the display of a message informing that locking is not possible.

2. A system as claimed in claim 1, **characterised in that** it comprises a user interface display means (UI1) displaying information representative of the data read and the identifier of the vehicle (10), and a keyboard on the portable terminal (30) for manually entering said displayed information.

3. A system as claimed in claim 1, **characterised in that** the information representative of the data read and the vehicle identifier is introduced by approaching the portable terminal (30) to the user interface (UI1), triggering the establishment of a contactless communication with the portable terminal and the transmission of said information to this portable terminal.

4. System according to any one of the preceding claims, **characterised in that** when the insert is inserted into the lock, the device (1) compares the code emitted by the chip of the insert with a reference code identifying the electronic chip of the moving chain of this vehicle, and triggers the locking of the insert when the codes are identical.

5. System according to any one of the preceding claims, **characterised in that** the introduction of a command on the user interface triggers the display of a code to be introduced on the keyboard of the portable terminal, said introduction of the code triggering the geolocation of the portable by an integrated module and the transmission to the server of a message indicating the end of the rental by specifying where the vehicle is located.

6. System according to any one of claims 1 to 4, **characterised in that** the introduction of a command on the user interface triggers the display of a code to be introduced on the keyboard of the portable terminal, said introduction of the code triggering the appearance of a menu enabling geolocation information to be introduced manually and the transmission to the server of a message indicating the end of the rental by specifying where the vehicle is located.

7. System according to any one of claims 1 to 4, **characterised in that** the input of a command on the user interface triggers the geolocation of the vehicle by a module integrated into the device (1), the geolocation information produced by said module being communicated to the portable terminal (30) in order to be transmitted to the remote server (20).

8. System according to any one of claims 5 to 7, **characterised in that** said server (20) records in its memory information specifying that the vehicle is available for a new loan and that it is available at the location indicated by the geolocation information transmitted.

9. System according to any one of the preceding claims, **characterised in that** it also comprises a step of taking at least one photograph of the vehicle with its chain moored to a fixed point, the photograph being transmitted to the server and stored in the memory.

10. System according to claim 1, **characterised in that**, when the identifier of the electronic chip of the insert inserted in the electric lock corresponds to that of the vehicle's mobile docking chain, the on-board device is configured to lock the electric lock and does not enter into communication with the remote server (20).

11. System according to any one of the preceding claims, **characterised in that** the server (20) has means for receiving a reservation request for a shared vehicle currently moored at a geolocated point and means for writing to the memory associated with this vehicle to indicate that this vehicle is reserved, the reception from a portable terminal (30) of information representative of a read data item and of the identifier of a vehicle triggers a message to this portable terminal signifying that the said vehicle is reserved and inhibiting the transmission by the server of the authorisation code.

12. System according to claim 11, **characterised in that** the message transmitted by the server (20) also includes an identifier of another available shared vehicle (10) located near the shared and reserved vehicle, in which case the server does not transmit an authorisation code, the identifier of this other vehicle being displayed on the screen of the portable terminal.

13. Method for making shared vehicles (10) available, implemented in a system, **characterised in that** it comprises :
- at least one shared vehicle (10) having its own mobile docking chain terminating at one end in a mechanical insert intended to be inserted in a lock, said insert having an electronic chip containing an identifier of the electronic chip and carrying an apparatus comprising a User Interface (UI1), a means of reading the electronic chips, and an electrical lock for docking the vehicle with its own mobile docking chain to a fixed point,
- at least one portable communication terminal (30) equipped with a means of communication with a remote server,
- a remote server (20) equipped with encryption means and a memory containing codes identifying at least each chip in the moving chain insert of each vehicle,
the process comprising the following steps:
- reading (2.2, 2.3) by the reading means of the on-board device of the identifier of the electronic chip emitted by said electronic chip when the insert containing the electronic chip is inserted into the lock,
- generation within the on-board device of information (BLOC2) representing the identifier of the electronic chip and an identifier of the vehicle,
- introduction (2.5) of said information to the portable terminal triggering transmission (2.6) of the information representing the shared vehicle to the remote server,
- generation by the server of an authorisation code (BLOC4) which is a function of at least the information transmitted and stored secret data associated with the vehicle, and transmission (2.8) of said authorisation code in encrypted form to the portable terminal,
- introduction (2.10) of a user action at the user interface triggering transmission of the authorisation code to the embedded device,
- receipt of the authorisation code from the vehicle triggering the release of the electric lock (2.12),
in which the on-board apparatus has a memory containing at least one plurality of identifiers of electronic chips of mooring chain inserts secured to fixed points, the method further comprising :
- locking of the electric lock when the identifier of the electronic chip of the insert inserted in the electric lock corresponds to a said identifier of the electronic chip of an insert of a mooring chain secured to a fixed point, a screen (45) of the user interface then displaying an end of rental code which the user transmits to the server which stores in its memory information specifying that the vehicle is moored at this location and authorises the rental of a vehicle from this location, and
- non-locking of the electric lock on the inserted insert when the identifier of the electronic chip corresponds neither to a securing chain secured to a fixed location, nor to the mobile securing chain of the vehicle, the on-board device triggering, on insertion of such an insert whose electronic chip identifier is not recognised by the on-board device, the display of a message informing that locking is not possible.

14. Shared vehicle (10) with on-board equipment comprising :
- a User Interface (UI1),
- an own mobile docking chain terminating at one end in a mechanical insert for insertion into a lock, said insert having an electronic chip containing an identifier for the electronic chip,
- a means of reading electronic chips,
- an electric lock (13) configured to immobilise the vehicle at a predetermined location by inserting said mechanical insert and closing the lock,
- a control unit emitting a signal to change the state of an electric lock in order to release and lock the mechanical insert,
said shared vehicle being **characterised in that** the reading means reads the identifier of the electronic chip emitted by the electronic chip when the insert containing the electronic chip is inserted in the lock, the control unit generating information representative of the identifier of the electronic chip and of an identifier of the vehicle, an action introduced on the user interface (UI1) triggering the transmission of the representative information to the server using a communication means of a mobile terminal,
receiving back from the vehicle, by means of said communication means of said portable terminal, a code which is at least a function of the identification data changing the state of its electric lock,
the on-board device having a memory containing at least one plurality of identifiers of electronic chips of mooring chain inserts secured to fixed points, the electric lock being configured to lock when the identifier of the electronic chip of the insert inserted in the electric lock corresponds to a said identifier of the electronic chip of a mooring chain insert secured to a fixed point, a screen (45) of the user interface then being configured to display an end of rental code that the user transmits to the server, which stores in its memory information specifying that the vehicle is moored at this location and authorises the rental of a vehicle from this location, and
in which the on-board device is configured so as not to lock the electrical lock on the inserted insert when the identifier of the electronic chip corresponds neither to a securing chain secured to a fixed location, nor to the mobile securing chain of the vehicle, the on-board device being configured, on insertion of such an insert whose identifier of the electronic chip is not recognised by the on-board device, so as to trigger the display of a message informing that locking is not possible.
